(19) 

**Europäisches Patentamt**
**European Patent Office**
**Office européen des brevets**

(11) **EP 4 336 024 A1**

(12) **EUROPEAN PATENT APPLICATION**

(43) Date of publication:
**13.03.2024   Bulletin 2024/11**

(21) Application number: **23020376.2**

(22) Date of filing: **11.08.2023**

(51) International Patent Classification (IPC):
**F02C 1/00** *(2006.01)*          **C25B 9/05** *(2021.01)*

(52) Cooperative Patent Classification (CPC):
**F02C 1/00; C25B 9/05**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.09.2022  AR P220102445**

(71) Applicant: **Iglesias Schoo, Raúl Alberto**
**1636 - Buneos Aires Olivos (AR)**

(72) Inventor: **Iglesias Schoo, Raúl Alberto**
**1636 - Buneos Aires Olivos (AR)**

(74) Representative: **Ruo, Alessandro**
**Ruo Patentes y Marcas S.L.P.**
**Avenida de Aguilera, nº23, 1º**
**03007 Alicante (ES)**

(54) **GASEOUS HYDROGEN GENERATOR WITH NO EXTERNAL ELECTRICAL CONSUMPTION**

(57)    The operation of the novel device begins in an extreme pressure electrolyser, in which the water molecule is split into its two constituent components, hydrogen and oxygen.

Hidrogen at extreme pressure and at the exit temperature of the electrolysis evolves, delivering useful work in hydrogen expansion turbines in several stages in series, with alternating enthalpy increases, due to heat gain in suitably arranged atmosheric heat exchangers.

Hydrogen expansion turbines are mechanically coupled to the electric generator.

This generator, which is the one that provides electrical energy that feeds the electrolysis reaction, at high pressure inside the electrolyser.

Oxigen at extreme pressure and temperature at the outlet of the electrolyser evolves, delivering useful work in oxygen expansion turbines in several stages in series, with alternating enthalpy increases, due to heat gain in convenient heat exchangers, conveniently arranged, these turbines oxigen expansion are also mechanically coupled to the electric power generator and multistage extreme pressure pump.

This multi-stage, extreme-pressure pump, feeds water into the electrolyser and is what induces this enourmous pressure in the gases produced in electrolysis.

Oxygen, when it was exhausted its capacity to deliver usefulwork, is realased into the environment to be incorporated into the air in its mixture with the nitrogen in the environment.

The hydrogen is channeled to be used as a clean fuel with zero polluting emissions, to an internal combustion engine, to an external combustion machine or, more preferably, to a fuel cell that has superior performace.

The effluents from the combustion of hydrogen by any device is water vapor, friendly to the emvironment, without polluting emissions or increasing the greenhouse effect in our atmosphere.

The hydrogen is channeled to be used as a clean fuel zero polluting emissions, to an internal combustion engine, to an external combustion machine or, more preferably, to a fuel cell that has superior performance.

The effluents from the combustion of hydrogen by any device is water vapor, friendly to the environment, without polluting emissions or increasing the greenhouse effect in our atmosphere.

This innovate device has the very original and exclusive advantage of obtaining a singnificant flow of energy, absorbing heat from the atmosphere, after the numerous expansions of ther gases involved without affecting the environment and without the need to consume external electrical power to the device.

**(Cont. next page)**

# FIGURA

**Description**

## TITLE AND TECHNICAL FIELD OF THE INVENTION

The present invention of a gaseous hydrogen generator, without external electrical consumption, obeys the urgent need to continue enjoying the benefits provided by the use of energy, without increasing the deterioration of the environment, or contaminating the planet with harmful substances, do not cause greenhouse effect and do not consume external electrical energy.

## STATE OF THE ART AND THE PROBLEM TO BE SOLVED

The generation of gaseous hydrogen is usually obtained mainly by three methods:

a) By cracking hydrocarbons, using high pressure and high temperature, with the assistance of appropiate catalysts, but generating high carbon dioxide emissions, wich generate high pollution and the greenhouse effect.

b) By means of high-temperature water vapor and coal, which also generate high carbon dioxide emissions, which produce high pollution and greenhouse effect.

c) By electrolysis of chemical substances, in which one of its main components is hydrogen, this method is usually not polluting, but it consumes huge amounts of electrical energy, which makes this procedure uneconomical, unless there is a huge amount of electrical energy available, at very low cost, wich is increasingly rare.

In recent times, it has been called green hydrogen, the hydrogen that is generated using electrical energy by alternative systems, be it wind energy, solar energy or another non-conventional method.

Although the latter brings many ecological advantages, and in principle economic advantages, it has the disadvantages that belong to each of the non-conventional methods of electric power generation.

## OBJECT OF THE INVENTION

To solve the problem, we must remember a very old prophecy, which says: ¨I believe that one day water will be used as fuel, that de oxygen and hydrogen that constitute it, used separately and simultaneously, will produce an inexhaustible source of light and heat¨, professed by Jules Verne in 1,874.

The object of this invention is to achieve the materialization of a very innovative device, capable of taking advantage of filtered water from any source, an overabundant resource, lacking high costs of obtaining it, a safe element that is not harmful to health of animals or plants, to generate hydrogen, without using external electrical energy, without generating harmful effluents, or greenhouse effect.

The hydrogen thus obtained can be generated in the same homes, in industries, in boats and in terrestrial automotive means, having the only need of a filtered water supply of any condition, for the device operate, with the exception of the case of boats, which can be supplied from the environment in which they move, the same, which is very convenient, by the way.

This combustible hydrogen thus generated can be used to power internal combustion engines, in external combustion boilers or, more desirable, in fuel celds that greatly increase energy efficiency.

The architecture of the new device allow a paradigm shift and the large power plants that generate energy will become obsolete and that there is in each entity, be it a home, an industrie, a motor vehicle, or a boat, or a spaceship a piece of equipment supplying individual energy needs in a particular way, with elimination of electrical energy distribution networks.

## PHYSICAL PRINCIPLE OF OPERATION

When we analyze the procedure of electrolysis of water, remembering Faraday's Law we have that:

1) The amount of chemical reaction that occurs at each electrode is directly proportional to the total amount of electricity that has passed through the solution.

2) The umber of equivalents of the reaction that takes place at the cathode is exactly equal to the number of equivalents of reaction at the anode ( this is easily understood from our knowledge of electricity: for each electron that enters the solution at the cathode must leave an equal number from the anode to complete the circuit ).

3) The process of electrolysis of water, consisting of its dissociation into its chemical components, hydrogen and oxigen, is an exclusively electronic phenomenon and on an atomic scale and is independent of the pressure at which we carry out the reaction.

Although the third term was not explicity mentioned by Faraday, in his statement of the Law, it is very simple and practical to deduce it due to the intrinsec nature of the electronic reaction.

And it is very understandable that Faraday, at that time, was only focused and concentrated on the study of electrical and electronic reactions, which were the predominant mystery in this historical stage of scientific progress in the year 1,834, completely ignoring the funfamental importance of one of them, the present factors, which is the pressure of the reaction, which today allows us to materializa the present invention of the novel hydrogen generating device, for its use as fuel.

The later should not be taken as a criticism of one of humanity's greatest scientists, just knowing his life, his carrer, gives us a sample of his overwhelming intelectual level, an enormous stubbornness, empathy and perseverance in discovering the secrets of nature, despite not having received academic training, simply the analysis of this factor, which is the pressure at which the task is carried out, was not within their study objective.

Here it is necesary to mention that to study and analize this new device, we must resort to thermodynamics, as a fundamental science that allows us to design this equipment.

Particularly if we study the history of the advance of thermodynamic science, we find ourselves with an almost irreverent paradoxical situation, which is that engineers built steam engines and machimes arround 1,663, when the engineer Thomas Savery invented a steam engine to drain the water from coal mines in England.

Said steam engines had important improvements and in 1,769 it was the engineer James Watt who patented and built a steam engine, already safe to use and is considered the inventor of the steam engine.

However, it is not until well into the 19th century that Sadi Carnot, Clausius, Clapeyron and Lord Kelvin developed the corresponding theory, with the statement of the second principle of thermodynamics and other theoretical artillery that supports and explains, for what was invented and worked two centuries before, it is wonderfull.

However, in order to support the principle of operation of this novel device, we must resort to the first principle of thermodynamics.

It was always very helpful to examine and study the texts of the argentine engineer Ernesto M. Leikis ( Clave de Termodinamica tecnica ) who, when he proposes an evolution exercise in a boiler, mention verbatim: In the boiler, evolution is quasistatic, without exchange working with the outside ( there is no axis ) and from the first principle Q = ( variation of enthalpy of the liquid ) is obtained, while the water passing through the pump practically does not change its enthalpy.

Now we consider the compression work of the liquid pump, in this case the water pump that increases the pressure of the fluid and, from the point of view raised in the firs principle of thermodynamics, we have that:

$$ Q = ( I_2 - I_1 ) + L $$

Expression in wich Q is the heat of the pumping reaction, which, being an adiabatic evolution, has a null value.

I corresponds to the enthalpy value of the fluid to be compressed ( we are in an open system ) with subscript 1 being the input of the water and subscript 2 being the output of the water after being pumped.

L is de work that the pump provides for the task of raising the water pressure.

Therefore we are left:

$$ ( I_2 - I_1 ) = P \times dv $$

Being L, the work involved in pumping the water, the multiplication between the pressure by the volume differential between the water before its compression and the end of its compression.

From the sign analisys, it is worth clarifying that whenever there is a compresion, the eventual variation in volume decreases, therefore the initial negativa sign in the equation is transformed into a positive sign.

But here we realize that water behaves like a theorical and perfectly incompressible fluid, which is verified experimentally, for example, seawater at a depth of 4,000 meters omñy decreases its original volume by 1,3 %, negligible as we know, explained by Engineer Esnesto M. Leikis when he mentioned that the enthalpy variation in pumping water is tiny because dv ( volume differential) is negligible.

As the dv ( volume diferential ) is negligible, this implies that the power consumed to achieve enormous increases in the pressure of a practically incompressible fluid is of a very small value.

And this property is what allows us to invent this novel device for the separation of gaseous hydrogen, from its powerfull chemical bond with oxigen, when they form water.

Therefore, our novel device consists of a container subjected to very extremely hight pressure, within which the electrolyser itself is located, with its two main elements, the anode and the cathode,which allow, trought the application of an electric current, the dissociation of water molecules into hydrogen gas molecules and into oxigen gas molecules.

It is necessary to clarify that within the electrolyser, its is necessary that a selected conductive substance be present, which acts as catalyst to facilitate the intended dissociation of water into hydrogen gas and oxigen gas as the desired objetive.

We must also provide an automatic purge system for saturated waters that already hinder the desired reaction and this purge system is the one that allows the increase of fresh substance appropiate for the reaction.

And when we refer to very extremely high pressure inside the electrolyser, we are referring to pressures of the order of ten thousand BAR, or possibly higher, because for a liquid like water, in practical and effectively incompressible terms, being subjected to these high pressures, does not affect its thermodynamic properties, under appropiately selected temperature conditions, but by giving the impression of current to the electrolyser, both gaseous hydrogen and gaseous oxigen will sprout at the very high pressure ( another different phenomenon is phisically impossible ) with a natural increase in temperature due to the phenomenon of electrolisis, which involves a flow of current and because of the irreversibilities of any process.

And from thermodynamic point of view, both gases, at high pressure and temperature, have a greatly increased enthalpy, which allows them to carry out enormous amounts of work in their evolution, using expansion turbines staggered im series, with use of useful energy, while end of the shafts of the turbines used.

It is opportune to explain that each of the hydrogen and oxigen expansion turbines wil be appropriately designed so that the outlet temperature of each turbine is much lower than ambient temperature, in such a way that, in the heat exchangers at the outlet from each expansion turbine, the gases increase their temperature and consecuently their enthalpy at the expense of air temperature and atmosferic heat, achieving a very convenient atmospheric cooling effect.

In short, this heat energy obtained from the atmospheric environment is what, transformed into motor energy, by means of turbines in series, where hydrogen and oxigen evolve, is what drives the electric generator and the high-pressure pump, which feed the high pressure electrolyser.

It is really important and essential to note that since it is not a piece of equipment that obtains energy from combustion, in a closed thermodynamic cycle, then the insurmountable ceiling is not aplicable, wich imposes the thermodynamic performance of a Carnot cycle and we have no limit in performance and potential of our new device.

It is also peremptory to mention that the emissions of the complete equipment are intended gaseous hydrogen and pure gaseous oxygen, which is returned to the atmospheric environment and a fraction of the water that entersthe electrolyser that is purged in order to increating the operating performance of the equipment.

Non toxic gases or greenhouse effect are generated and a cooling effect is caused in the environment of the device, due to the strong expansion of the working gases.

And precisely this strong cooling of the sorrounding atmosphere becomes the germ of the driving force that drives the device.

The supply water can be seawater, or wastewater with the only condition that it be properly filtered, likewise the electrolyser will have a mechanism that allows recirculation and discarding of a part of the treated water, in order to avoid inconvenient concentration of unwanted elements interfere with the electrolysis process.

For each type of water to be treated, the electrolysers must be carefully designed and with specific catalyst elements, for the types of water to be electrolyzed.

The equipment must have an extreme pressure pump and multiple stages to achieve the very high operating pressures in the electrolyser, the higher design pressure, the greater the production of electrical energy.

## OPERATION OF THIS INVENTION AND FIGURE

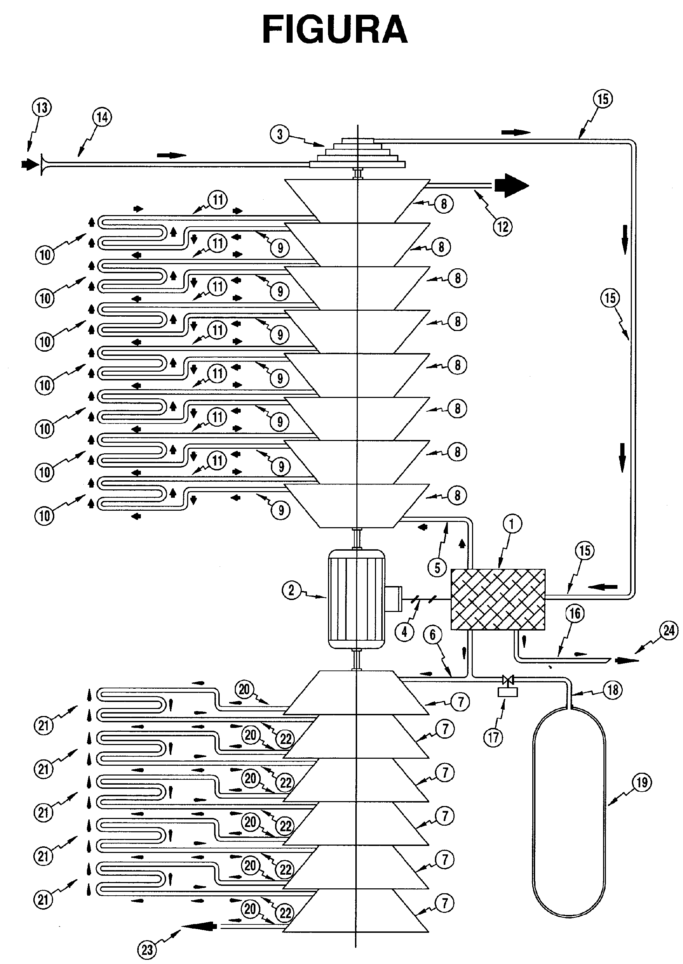

In the figure, the very high pressure electrolyser is indicated as 1, which is filled with water and also contains an electrolytic substance that facilitates and favors the dissociation of the chemical elements that make up the working water and an automatic purge system for substances that do no favor the electrolysis reaction.

In the figure, the electric power generator that provides the energy to produce the phenomenon of electrolysis of water for separation of the component elements of electrolysis of water to be electrolysed is indicated as 2.

In the figure indicates the water pump that feeds the electrolyser, an extremely hight-pressure multistage pump.

In the figure, the electroduct that delivers electrical energy to the electrolyser from the rotary generator is indicated as 4.

In the figure, the high pressure and high temperature hydrogen outlet pipe is indicated as 5, at the outlet of the electrolyser,so that it enters the first of the hydrogen expansion turbines, which motorize the rotary generator an the pump, multistage extreme pressure water pump.

Indicated as 6 is the high pressure and high temperature oxigen outlet conduit at the outlet of the electrolyser, so that it enters the first of the oxigen expansion turbines that drive the totary generator and the extreme pressure multistage water pump.

Is indicated as 7 is one of the multiple expansion turbines in which the extreme pressure oxigen is successively delivering power in stages, with the consequent decrease in its enthalpy in the successive turbines that are mechanically coupled to motivate the activation of the electric generator and the multistage extreme pressure water pump.

One of the expansion turbines is indicated as 8 in which the extreme pressure hydrogen successively delivers power in stages, with the consequent decrease in its enthalpy in the successive turbines that are mechanically coupled to motivate the activation of the electric generator and the multistage extreme pressure water pump.

The oulet conduit of the hydogen expansion turbine at extremely low temperature is indicated as 9, which directs the hydrogen to a radiator captures heat from the atmospheric air in order to increase the entalphy of the hidrogen, in order to be more productive in the following expansion turbine.

One of the atmospheric hydrogen heat exchangers is indicated as 10, which is downstream from the outlet of the expansion turbine, therefore this hydrogen is at extremely low temperature due to the powerfull expansion with delivery of hydrogen work, in this way, a significant amount of heat is captured in this exchanger, which produces an atmospheric cooling effect and an increase in hydrogen enthalpy, which adds power for the interaction with the following turbine. This consequence can be used to provide cooled air for comfort in buildings in summer periods or to provide cold to refrigeration installations.

Indicated as 11 is the outlet conduit of the atmospheric hydrogen heat exchanger, which channels the flow of hydrogen to the inlet of the next hydrogen expansion turbine.

The hydrogen outlet conduit of the novel device is indicater as 12, already suitable for use as fuel in internal combustion engines, in external combustion machines or in fuel cells.

Its is indicated as 13 the filtered water inlet mouth to the new equipment.

The filtered water feed conduit is indicated as 14 for its entry to the extreme pressure multistage water pump.

The conduit that transports water at extreme pressure from the outlet of the multistage pump to enter the extreme pressure electrolyser is indicated as 15.

The conduit for purging liquids from the electrolyser is indicated as 16, liquids eventual concentrations of harmful contaminants that do not facilitate the process.

The control valve for the start-up of the device is indicated as 17, allowing the reserve of gaseous oxigen at very high pressure to allow the start-up of the system when the production of hydrogen fuel is required.

Indicated as 18 is the oxigen conduit that interconnects the oxigen storage container to start the device, at a very hight pressure, with the entry to the oxigen expansion turbine to start the rotation of the entire mechanism.

Indicated as 19 is the container for storing very hight-pressure start-up oxigen, which gradually replenishes its charge during the operation of the equipment in order to be available for the next start-up.

The outlet conduit of a turbine is indicated as 20, in which oxigen expands, providing work to drive the electric generator.

Its indicated as 21 the atmospheric heat exchanger that provides heat from the environment, the oxigen that leaves one of the oxigen turbines at extremely low temperature after ist expansion, with delivery of work in an oxigen turbine, this cooling effect it can also be used for cooling buildings in summer periods or as industrial refrigeration for cold rooms.

The oxigen channeling conduit is indicated as 22, its temperature and enthalpy already increased for its entry into an oxigen expansion turbine so that in this way it delivers its useful energy in the form of work, in the axis of the turbine.

The conduit that evacuates to the atmosphere the oxigen that has already delivered all its capacity to generate useful work is indicated as 23.

## Claims

**1.** An GASEOUS HYDROGEN GENERATOR, WITHOUT EXTERNAL ELECTRICAL CONSUMPTION, comprising two sets of expansion turbines, CHARACTERIZED BECAUSE: Hydrogen and oxygen drive the turbines, arranged in a cascading staggered series, while a cascading staggered series is driven by very high-pressure hydrogen gas in a deductive manner and the other cascading staggered series is cascadingly actuated successively by very high pressure gaseous oxygen, Both gases have been generated by electrolysis, in an extremely high pressure electrolyser, which is powered by an electric generator, this electric generator is mechanically coupled to two sets of turbines that provide motorization to the same and an extremely high pressure multistage feed water pump, which is also mechanically coupled to the turbine sets and the electric generator. This extreme pressure multistage water pump is the one that introduces the water to be electrolyzed into the electrolyser extreme pressure, releasing oxigen into the atmosphere after its last evolution, in the last oxygen expansion turbine, once it has delivered all its capacity to deliver mechanical energy by expansion and the delivery of gaseous hydrogen, the finished product of this device, suitable for use as fuel in internal combustion engines, in external combustion machines or fuel cells, all without requiring the assistance of exernal electrical power to the device.

**2.** An GASEOUS HYDROGEN GENERATOR, WITHOUT EXTERNAL ELECTRICAL CONSUMPTION, according to the first claim CHARACTERIZED BECAUSE : Hidrogen at extreme pressure, after evolving in the series of hydrogen turbines, is available to be used as fuel in internal combustion engines, in external combustion machines or in fuel cells, while the oxygen resulting from the electrolysis reaction is released into the atmosphere.

**3.** An GASEOUS HYDROGEN GENERATOR, WITHOUT EXTERNAL ELECTRICAL CONSUMPTION, according to the first claim CHARACTERIZED BECAUSE : The device's feed water, which is used as the source of its two chemical components, can be seawater or it can be sewage, with the only condition being an adequate filtering process before it enters the extreme pressure multistage pump that feeds the electrolyser and said extreme pressure electrifier has wastewater purge system that could hinder the normal process of electrolysis that is carried out in the innovative device, all this without external electrical consumption.

**4.** An GASEOUS HYDROGEN GENERATOR, WITHOUT EXTERNAL ELECTRICAL CONSUMPTION, according to the first claim CHARACTERIZED BECAUSE : Oxigen, after leaving the extreme pressure electrolyser, derives a smal fraction of its generated quantity, through an automatic valve system, to an extreme pressure oxygenstorage container, which will operate to statr up the new device in order to respond to the pissible variability in the demand for the hydrogen fuel produced.

**1.** An GASEOUS HYDROGEN GENERATOR, WITHOUT EXTERNAL ELECTRICAL CONSUMPTION, comprising two sets of expansion turbines, CHARACTERIZED BECAUSE: Hydrogen and oxygen drive the turbines, arranged in a cascading staggered series, while a cascading staggered series is driven by very high-pressure hydrogen gas in a deductive manner and the other cascading staggered series is cascadingly actuated successively by very high pressure gaseous oxygen, Both gases have been generated by electrolysis, in an extremelly high pressure electrolyser, which is powered by an electric generator, this electric generator is mechanically coupled to two sets of turbines that provide motorization to the same and an extremelly high pressure multistage feed water pump, which is also mechanically coupled to the turbine sets and the electric generator. This extreme pressure multistage water pump is the one that introduces the water to be electrolyzed into the electrolyser extreme pressure, releasing oxigen into the atmosphere after its last evolution, in the last oxygen expansion turbine, once it has delivered all its capacity to deliver mechanical energy by expansion and the delivery of gaseous hydrogen, the finished product of this device, suitable for use as fuel in internal combustion engines, in external combustion machines or fuel cells,all without requiring the assistance of exernal electrical power to the device.

# FIGURA

Europäisches
Patentamt

European
Patent Office

Office européen
des brevets

# EUROPEAN SEARCH REPORT

Application Number

EP 23 02 0376

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/145570 A1 (HEROLD JOCHEN [DE] ET AL) 25 May 2017 (2017-05-25)<br>* paragraphs [0032] – [0035], [0038], [0041]; claims 7,8; figure 1 * | 1-3 | INV.<br>F02C1/00<br>C25B9/05 |
| X,P | WO 2023/001787 A1 (GREEN HYDROGEN SYSTEMS [DK]) 26 January 2023 (2023-01-26)<br>* page 2, lines 29-31; figures 1-5B *<br>* page 3, lines 17-21 *<br>* page 4, lines 4-20,28-31 *<br>* page 6, lines 9-21 *<br>* page 12, line 26 – page 13, line 3 *<br>* page 13, lines 9-19 *<br>* page 19, line 26 – page 20, line 6 *<br>* page 20, line 6 – page 21, line 7 * | 1-3 | |
| X,P | US 2023/129611 A1 (GARFUNKEL ALAN J [US] ET AL) 27 April 2023 (2023-04-27)<br>* paragraphs [0023] – [0026]; figure 1 * | 1-3 | |

TECHNICAL FIELDS
SEARCHED      (IPC)

F02C
C25B

The present search report has been drawn up for all claims

| Place of search | Date of completion of the search | Examiner |
|---|---|---|
| The Hague | 11 January 2024 | Steinhauser, Udo |

EPO FORM 1503 03.82 (P04C01)

## ANNEX TO THE EUROPEAN SEARCH REPORT
## ON EUROPEAN PATENT APPLICATION NO.

EP 23 02 0376

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2024

| Patent document cited in search report | | Publication date | Patent family member(s) | | Publication date |
|---|---|---|---|---|---|
| US 2017145570 | A1 | 25-05-2017 | CA | 2953842 A1 | 07-01-2016 |
| | | | DE | 102014212718 A1 | 07-01-2016 |
| | | | DK | 3140435 T3 | 28-01-2019 |
| | | | EP | 3140435 A1 | 15-03-2017 |
| | | | US | 2017145570 A1 | 25-05-2017 |
| | | | WO | 2016001155 A1 | 07-01-2016 |
| WO 2023001787 | A1 | 26-01-2023 | NONE | | |
| US 2023129611 | A1 | 27-04-2023 | US | 2023129611 A1 | 27-04-2023 |
| | | | WO | 2023076361 A2 | 04-05-2023 |

EPO FORM P0459

For more details about this annex : see Official Journal of the European Patent Office, No. 12/82